# FASCICULE DE BREVET EUROPEEN

(11) **EP 0 442 837 B1**
(45) Date de publication et mention de la délivrance du brevet: **09.06.1993**
(21) Numéro de dépôt: 91470005.9
(22) Date de dépôt: 14.02.1991
(51) Int. Cl.: F24B 1/18

(54) **Four réfractaire.**
Ofen aus feuerfestem Material.
Refractory stove.

(30) Priorité: 15.02.1990 FR 9001991
(43) Date de publication de la demande: 21.08.1991
(73) Titulaire: Société Française des Bétons Protégés PASEK FRANCE, 54890 Onville (FR)
(72) Inventeur: Visca, Augusto, F-54460 Liverdun (FR)
(74) Mandataire: Poupon, Michel

(56) Documents cités:
- DE-A- 2 548 969
- DE-A- 2 716 715
- DE-A- 2 826 138
- DE-U- 7 214 364
- DE-U- 7 620 503
- DE-U- 8 236 231

## Description

La présente invention a pour objet un four perfectionné du type comportant essentiellement une hotte surmontant un corps de foyer fermé muni d'une porte d'accès.

Des fours de ce type existent bien entendu de longue date.

Ils présentent tous cependant différents inconvénients :

Ainsi les barbecues classiques, parfois très dépouillés, sont vendus à des prix souvant très bas, mais pour des qualités de produits souvent très faibles. De plus ils restent par destination très spécifiques dans leur utilisation.

De même on a déjà essayé de commercialiser des fours réfractaires de haut de gamme. Les performances sont remarquables mais les prix en sont souvent prohibitifs.

Par ailleurs on décrit dans le document DE-A-2 548 969 un four en matériau réfractaire de forme pyramidale mais d'une part l'assemblage de ses éléments n'est pas commode et d'autre part l'évacuation directe des fumées par le haut présente de nombreux inconvénients : grande déperdition de chaleur, dégagement des odeurs, projections de graisses et formation de gaz toxiques.

La présente invention a pour objet de remédier à ces inconvénients en proposant un four à foyer fermé qui soit relativement bon marché tout en offrant des bonnes performances et en étant polyvalent dans son utilisation.

Conformément à l'invention ce résultant est obtenu avec un four de cuisson du type comportant essentiellement une hotte surmontant un corps de foyer fermé muni d'une porte d'accès et d'une grille de foyer, la hotte étant disposée à emboitement sur le corps de foyer, le foyer étant composé essentiellement d'éléments s'imbriquant l'un dans l'autre réalisés en béton réfractaire, caractérisé en ce que le foyer est surmonté par un plateau de répartition de chaleur qui prend appui sur le chant supérieur du corps de foyer au niveau de la jonction avec la hotte et en ce qu'un plateau plein anti-graisse en matériau réfractaire est disposé au dessous dudit plateau de répartition de chaleur, la zone de cuisson étant disposée entre lesdits plateaux.

Le four conforme à l'invention peut fonctionner avec tout moyen de chauffage, tel que bois, charbon de bois, gaz.

Le foyer fermé est entièrement réfractaire, ce qui permet de concentrer et de diffuser la chaleur de manière uniforme tout en mettant en jeu une très faible consommation d'énergie, que l'on peut évaluer au quart de l'énergie des fours classiques.

Le four de l'invention peut être muni d'un tourne-broche. Il présente ainsi les avantages d'un barbecue, d'un tourne-broche et d'un four réfractaire permettant la cuisson à l'ancienne de pains, pizzas, tartes, viandes, poissons, etc...

L'utilisation de béton réfractaire autorise la fabrication en série avec des moules ce qui entraine une diminution considérable des prix de revient.

Il pourra être disposé sur un pied support ou encore sur un socle, à demeure.

On comprendra mieux l'invention à l'aide de la description faite ci-après d'un mode de mise en oeuvre donné à titre d'exemple non limitatif en référence aux dessins annexés dans lesquels :
- la figure 1 est un vue en élévation d'un four confirme à l'invention avec vue en demi-coupe ;
- la figure 2 est une vue d'une variante.

Le four généralement référencé (1) comporte essentiellement un corps de foyer (2) surmonté d'une hotte (3).

La hotte (3) est à symétrie de révolution.

Elle est réalisée en béton réfractaire.

Elle est disposée à emboitement (4) sur le corps de foyer (2).

Le corps de foyer (2) comporte de préférence une porte (5) à un ou deux battants avec un bouton de commande (6). La hotte comporte des pattes et orifices (7) pour insérer un tourne-broche qui peut être muni d'un moteur d'entrainement.

Dans le corps de foyer (2) se trouve le foyer (8) proprement dit avec en dessous de lui un cendrier (9) qui peut être en outre actionné pour régler l'arrivée d'air de combustion.

Au dessus du foyer (8) est disposée une grille de foyer (10) qui prend appui, comme le corps de foyer (2), sur un fond circulaire (11).

Sur le fond (11) prend également appui un trépied (12) supportant un plateau plein (13) en matériau réfractaire. Ce plateau assure une bonne répartition de la chaleur et évite les chutes de graisse sur le foyer, ceci limitant en conséquence les fumées, les mauvaises odeurs ainsi que l'apparition de produits toxiques.

Les aliments à cuire sont disposés sur le plateau (13) sauf pour la fonction tourne-broche.

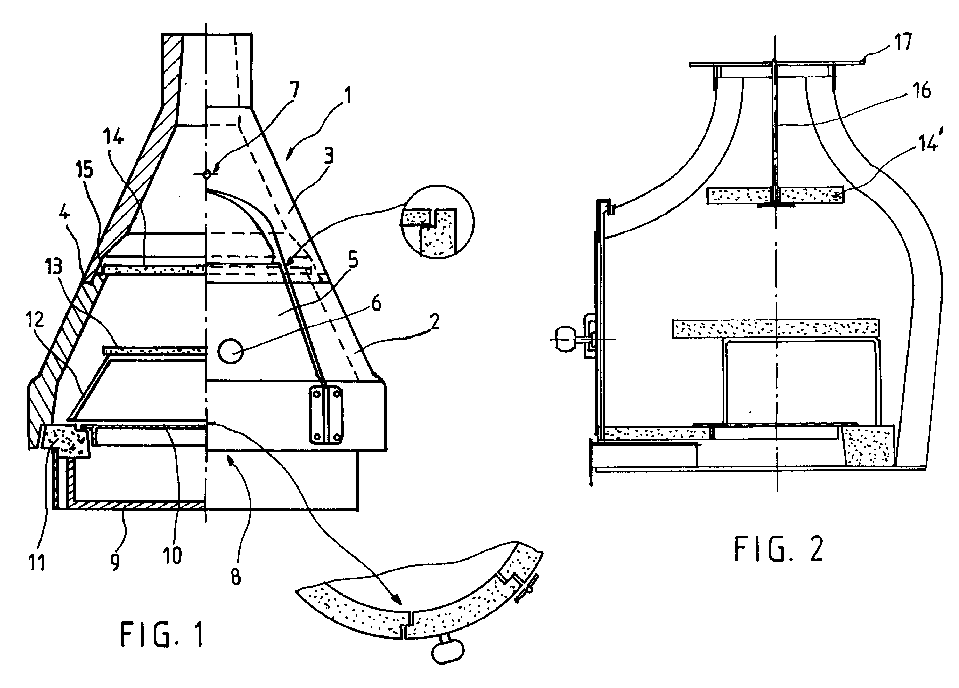

Un plateau (14) prend appui sur le chant supérieur (15) du corps de foyer (2) au niveau de la jonction avec la hotte (3), la section de celle-ci étant rétrécie à cet endroit à cet effet. Il a pour fonction de répartir la chaleur; dans la représentation de la figure 2, le plateau (14) est suspendu par une suspente (16) à une traverse (17).

Le four de l'invention peut être disposé sur un support ou intégré à un plan de travail à demeure.

## Revendications

1. Four de cuisson du type comportant essentiellement une hotte (3) surmontant un corps de foyer fermé (2) muni d'une porte d'accès (5) et d'une grille de foyer (10), la hotte (3) étant disposée à emboitement (4) sur le corps de foyer (2), le foyer étant composé essentiellement d'éléments s'imbriquant l'un dans l'autre réalisés en béton réfractaire, caractérisé en ce que le foyer est surmonté par un plateau de répartition de chaleur (14,14') qui prend appui sur le chant supérieur (15) du corps de foyer (2) au niveau de la jonction avec la hotte (3) et en ce qu'un plateau plein anti-graisse (13) en matériau réfractaire est disposé au dessous dudit plateau de répartition de chaleur (14,14'), la zone de cuisson étant disposée entre lesdits plateaux.

2. Four selon la revendication 1 caractérisé en ce qu'il est disposé sur un pied support ou sur un socle.

3. Four selon la revendication 2, caractérisé en ce que la hotte (3) comporte des pattes et orifices (7) pour insérer un tourne-broche.

4. Four selon l'une quelconque des revendications 1 à 3, caractérisé en ce que la grille de foyer prend appui, comme le corps de foyer (2) sur un fond circulaire (11).

5. Four selon l'une quelconque des revendications 1 à 4, caractérisé en ce que sur le fond du four (11) prend appui un trépied (12) supportant le plateau plein anti-graisse (13).

6. Four selon l'une quelconque des revendications 1 à 5 caractérisé en ce que la section de la hotte (3) au niveau de la jonction avec le corps du foyer (2) est rétrécie.

7. Four selon l'une quelconque des revendications 1 à 5, caractérisé en ce que le plateau de répartition de chaleur (14') est suspendu par une suspente (16) à une traverse (17) montée sur la hotte (3).

## Patentansprüche

1. Backofen, welcher im wesentlichen einen Rauchfang (3) über einem geschlossenen Herdkörper (2) aufweist, der mit einer Zugangstür (5) und einem Herdgrill (10) versehen ist, wobei der Rauchfang (3) in einer Aufnahme (4) des Herdkörpers (2) angeordnet ist und der Herd im wesentlichen aus Elementen zusammengesetzt ist, die dachziegelartig übereinanderliegen und aus feuerfestem Beton bestehen, **dadurch gekennzeichnet,** daß über dem Herd eine Hitzeverteilungsplatte (14, 14') angeordnet ist, die sich auf der oberen Schmalseite (15) des Herdkörpers (2) auf der Höhe der Verbindung mit dem Rauchfang (3) abstützt und daß eine ebene Anti-Fettplatte (13) aus feuerfestem Material unter der genannten Hitzeverteilungsplatte (14, 14') angeordnet ist, wobei sich die Backzone zwischen diesen Platten befindet.

2. Ofen nach Anspruch 1, **dadurch gekennzeichnet,** daß er auf einem Stützfuß oder Sockel angeordnet ist.

3. Ofen nach Anspruch 2, **dadurch gekennzeichnet,** daß der Rauchfang (3) Haken und Öffnungen (7) zum Einsetzen eines Drehspießes aufweist.

4. Ofen nach einem der Ansprüche 1 bis 3, **dadurch gekennzeichnet,** daß sich der Herdgrill ebenso wie der Herdkörper (2) auf einem runden Untersatz (11) abstützt.

5. Ofen nach einem der Ansprüche 1 bis 4, **dadurch gekennzeichnet,** daß sich auf dem Untersatz (11) des Ofens ein Dreifuß (12) abstützt, der die ebene Anti-Fettplatte (13) trägt.

6. Ofen nach einem der Ansprüche 1 bis 5, **dadurch gekennzeichnet,** daß der Abschnitt des Rauchfanges (3) in der Ebene der Verbindung mit dem Herdkörper (2) abgesetzt ist.

7. Ofen nach einem der Ansprüche 1 bis 5, **dadurch gekennzeichnet,** daß die Hitzeverteilungsplatte (14') durch eine Aufhängung (16) an einer auf dem Rauchfang (3) montierten Traverse (17) abgestützt ist.

## Claims

1. Oven for cooking, of the type comprising essentially a hood (3) mounted above an enclosed furnace body (2) provided with an access door (5) and with a furnace grill (10), the hood (3) being attached with a fitment (4) onto the furnace body (2), the furnace being composed essentially of elements which overlap each other and are made of fire-proof concrete, characterised in that the furnace is surmounted by a heat distribution tray (14, 14') which is supported on the upper edge (15) of the furnace body (2) at the level of the junction with the hood (3), an in that a full anti-grease tray (13), made of fire-proof material, is disposed below said heat distribution tray (14, 14'), the cooking area being disposed between said trays.

2. Oven according to claim 1, characterised in that it is disposed on a foot support or on a stand.

3. Oven according to claim 2, characterised in that the hood (3) comprises flaps and openings (7) for inserting a roasting spit.

4. Oven according to any of claims 1 to 3, characterised in that the furnace grill is supported, like the furnace body (2), on a circular base (11).

5. Oven according to any of claims 1 to 4, characterised in that a tripod (12), supporting the full anti-grease tray (13), is supported on the oven base (11).

6. Oven according to any of claims 1 to 5, characterised in that the section of the hood (3) at the level of the junction with the furnace body (2) is contracted.

7. Oven according to any of claims 1 to 5, characterised in that the heat distribution tray (14') is suspended by a sling (16) from a crosspiece (17) mounted on the hood (3).
